(19) **Europäisches Patentamt**

**European Patent Office**

**Office européen des brevets**

(11) **EP 1 131 820 B1**

(12) **FASCICULE DE BREVET EUROPEEN**

(45) Date de publication et mention
de la délivrance du brevet:
**25.01.2006 Bulletin 2006/04**

(21) Numéro de dépôt: **99972349.7**

(22) Date de dépôt: **16.11.1999**

(51) Int Cl.:
**G11B 9/04** *(2006.01)*

(86) Numéro de dépôt international:
**PCT/FR1999/002804**

(87) Numéro de publication internationale:
**WO 2000/030086 (25.05.2000 Gazette 2000/21)**

(54) **PROCEDE D'ECRITURE ET DE LECTURE D'UN SUPPORT D'INFORMATIONS COMPRENANT UN MATERIAU AVEC UNE SUCCESSION DE ZONES DE MATERIAU PRESENTANT RESPECTIVEMENT UN PREMIER ET UN DEUXIEME ETATS PHYSIQUES**

VERFAHREN ZUM SCHREIBEN UND LESEN EINES INFORMATIONSTRÄGERS BESTEHEND AUS EINEM MATERIAL, DAS EINE ABFOLGE VON MATERIALBEREICHEN MIT ERSTEN UND ZWEITEN PHYSIKALISCHEN ZUSTÄNDEN AUFWEIST

METHOD FOR READING AND WRITING A DATA STORAGE MEDIUM COMPRISING A MATERIAL WITH A SUCCESSION OF MATERIAL ZONES HAVING A FIRST AND SECOND PHYSICAL STATE RESPECTIVELY

(84) Etats contractants désignés:
**DE GB IT**

(30) Priorité: **17.11.1998 FR 9814404**

(43) Date de publication de la demande:
**12.09.2001 Bulletin 2001/37**

(73) Titulaire: **COMMISSARIAT A L'ENERGIE ATOMIQUE**
**75752 Paris Cédex 15 (FR)**

(72) Inventeurs:
 • **SALUEL, Didier**
   **F-38160 Saint Marcellin (FR)**
 • **BECHEVET, Bernard**
   **F-38640 Claix (FR)**

(74) Mandataire: **Poulin, Gérard et al**
   **Société BREVATOME**
   **3, rue du Docteur Lancereaux**
   **75008 Paris (FR)**

(56) Documents cités:
   **EP-A- 0 851 417**       **GB-A- 2 157 876**
   **US-A- 5 155 573**

## Description

Domaine technique

La présente invention concerne un procédé d'écriture et de lecture sur un support d'informations comprenant une couche d'enregistrement avec une succession de zones de matériau présentant respectivement au moins un premier et un deuxième états physiques.

On entend par état physique, une structure ou une composition particulière du matériau liée à une propriété physique, caractéristique de cet état.

A titre d'exemple, un état physique peut correspondre à un dopage particulier du matériau, à une structure ferroélectrique donnée ou à une structure cristalline du matériau. L'état du matériau se traduit par une propriété électrique ou optique, telle que, par exemple, une résistivité caractéristique.

En particulier, la couche d'enregistrement peut comporter une succession de régions respectivement dans un état cristallin et un état amorphe.

L'invention trouve des applications de façon générale dans l'enregistrement d'informations. Les informations peuvent correspondre à des données numériques, à des images ou à des sons par exemple.

L'invention peut en particulier être mise à profit dans les domaines de la télévision et de la réalisation de mémoires pour ordinateurs.

Etat de la technique antérieure

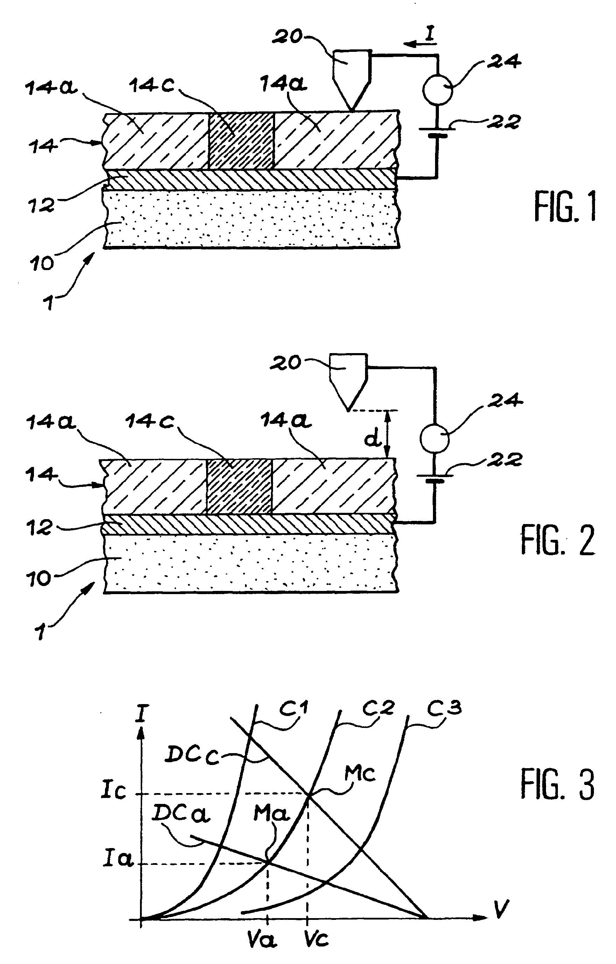

La figure 1 est une représentation schématique d'un système d'écriture et de lecture sur un support d'informations selon une technique connue basée sur la distinction entre deux états physiques d'un matériau.

Le support d'informations est repéré avec la référence générale 1.

Il comporte un substrat de support 10 recouvert d'une couche de matériau conducteur électrique formant une électrode 12.

Une couche d'enregistrement 14 recouvre l'électrode 12. Cette couche est en un matériau, tel que $Ge_2Sb_2Te_5$, par exemple, qui peut se présenter dans un état cristallin ou dans un état amorphe.

L'enregistrement des informations dans la couche d'enregistrement a lieu par un codage en une succession de zones dans un premier état physique (cristallin) et de zones dans un deuxième état physique (amorphe).

Sur la figure, les zones amorphes sont repérées avec la référence 14a et les zones cristallines avec la référence 14c.

L'enregistrement des informations a lieu par un échauffement plus ou moins fort des zones de façon à les faire passer d'un état amorphe à cristallin ou réciproquement.

L'échauffement a lieu en faisant circuler un courant électrique de chauffage plus ou moins intense dans différentes zones de la couche d'enregistrement 14. Le courant circule entre une pointe conductrice 20 appliquée contre une face d'écriture/lecture de la couche d'enregistrement et l'électrode 12. Il est fourni par un générateur non représenté sur la figure. La pointe 20 et le support d'informations 1 sont animés d'un mouvement de déplacement relatif de façon à balayer la couche d'enregistrement 14.

Cette technique d'enregistrement est connue sous la désignation "enregistrement à changement de phase".

La lecture des informations enregistrées sur le support 1 a également lieu au moyen de la pointe conductrice 20. Elle fait appel aux propriétés électriques du matériau de la couche d'enregistrement, qui présente une résistivité différente à l'état amorphe et à l'état cristallin.

Une source de tension 22 est connectée entre la pointe conductrice 20 et l'électrode 12 de façon à former un circuit de mesure avec une zone de la couche d'enregistrement avec laquelle la pointe 20 est en contact.

Un courant circulant dans le circuit de mesure est détecté par des moyens de mesure ampèremétriques 24 et la pointe conductrice 20 est déplacée à la surface de la couche d'enregistrement pour la balayer.

Le courant de mesure I peut prendre deux valeurs selon que la zone de la couche d'enregistrement 14 en contact avec la pointe 20 est amorphe 14a ou cristalline 14c. La résistance de la couche d'enregistrement 14 prend en effet deux valeurs, respectivement Ra et Rc, selon l'état amorphe ou cristallin du matériau.

En pratique, la résistance Ra est plus forte que la résistance Rc. On a donc :

- Ia=V/Ra, si la couche d'enregistrement est amorphe,
- Ic=V/Rc, si la couche d'enregistrement est cristalline.

Dans ces expressions V désigne la valeur de la tension fournie par la source de tension 22.

La distinction entre les deux états est d'autant plus aisée que le rapport Ra/Rc est plus élevé.

Le procédé de mesure ci-dessus pose des problèmes liés au contact mécanique et électrique entre la pointe conductrice et la face d'écriture/lecture de la couche d'enregistrement 14. En effet, après un certain nombre d'opérations de lecture, le déplacement de la pointe 20 contre la couche d'enregistrement 14 provoque une usure mécanique de la pointe et de la couche d'enregistrement. L'usure se traduit par des erreurs ou des imprécisions de la lecture.

La figure 2 illustre une deuxième technique connue, pour la lecture d'un support d'enregistrement 1 tel que décrit, permettant d'éviter les problèmes d'usure mécanique mentionnés ci-dessus.

La technique de lecture fait appel à l'effet tunnel.

L'équipement utilisé pour mettre en oeuvre la deuxième technique de lecture est sensiblement identique à l'équipement décrit en référence à la figure 1.

Il comprend un support de données 1 constitué d'un substrat 10, d'une électrode enterrée 12 et d'une couche d'enregistrement 14. Le dispositif de lecture comprend une pointe conductrice 20, une source de tension électrique 22 et un moyen de mesure 24. Toutefois, à la différence du dispositif de la figure 1, la pointe conductrice 20 est maintenant écartée de la face de lecture de la couche d'enregistrement 14 d'une distance notée d. Malgré cet espacement, un courant peut encore pénétrer dans la couche d'enregistrement, par effet tunnel.

Pour déterminer la valeur à laquelle s'établit l'intensité du courant, on a recours à un diagramme courant-tension. Un tel diagramme est représenté sur la figure 3. Sur ce diagramme, la tension V est portée en abscisses et le courant I en ordonnées. La caractéristique courant-tension est une courbe présentant un coude, comme pour les diodes tunnel. Trois caractéristiques C1, C2, C3 sont tracées sur la figure 3. Elles correspondent respectivement à trois distances différentes d1, d2, d3 entre la pointe 20 et la face d'écriture/lecture de la couche d'enregistrement. Pour une même tension appliquée entre la pointe conductrice 20 et l'électrode 12, le courant circulant dans le circuit de mesure est d'autant plus grand que la distance entre la pointe et la face de lecture est plus faible.

Dans l'exemple illustré, les distances d1, d2, d3, correspondant aux caractéristiques C1, C2 et C3, sont telles que d1<d2<d3.

Sur le diagramme on définit des droites de charge qui relient le courant I à la tension V et qui présentent une pente dépendant du caractère plus ou moins résistif du circuit. Lorsque la zone testée est amorphe, sa résistance Ra est forte, et la chute de tension est forte. Pour une zone cristalline, la résistance Rc est plus faible, ainsi que la chute de tension. Les droites de charge se présentent donc comme illustré sur la figure 3, sous les références DCa et DCc, respectivement pour une zone amorphe 14a et pour une zone cristalline 14c.

Si l'on considère la caractéristique C2 relative à une distance d2, le point de fonctionnement du circuit de mesure se situe soit en Ma (si la zone est amorphe) soit en Mc (si la zone est cristalline). Le couple courant-tension est alors soit Ia-Va (zone amorphe), soit Ic-Vc (zone cristalline).

Les variables Va, Vc, Ia et Ic correspondent respectivement aux tensions et aux courants dans les zones amorphes 14a et les zones cristallines 14c.

La mesure des courants Ia ou Ic par le moyen de mesure 24 permet dans ce deuxième mode de lecture, de distinguer encore l'état physique (amorphe ou cristallin) des zones balayées pour lire l'information codée sur le support d'enregistrement.

Le deuxième mode de lecture ne provoque pas d'usure de la face d'écriture/lecture de la couche d'enregistrement ni de la micropointe. Il présente cependant l'inconvénient d'une très grande sensibilité des mesures à la distance d séparant la micropointe de la couche d'enregistrement.

En effet, comme le montre la figure 3, pour une tension donnée, le courant qui circule dans une zone donnée du support d'enregistrement (amorphe ou cristalline) dépend beaucoup de la distance d (caractéristiques C1, C2, C3).

Ainsi, une zone cristalline pourrait être considérée par erreur comme étant une zone amorphe si la distance d entre la pointe et la face d'écriture/lecture venait à augmenter.

Une telle erreur est susceptible de se produire fréquemment lorsque la distance d est faible et lorsque la planéité du support d'enregistrement n'est pas parfaite.

Ainsi, le deuxième mode de lecture est sujet également à des erreurs de mesure.

Une illustration complémentaire de l'état de la technique peut être trouvée dans les documents (5), (6) et (7) dont les références sont précisées à la fin de la description.

Le document (5) décrit une lecture d'un support par mesure d'une résistivité avec et sans éclairage. Le document (6) décrit un dispositif d'observation de surface.

Exposé de l'invention

La présente invention a pour but de proposer un support d'enregistrement et un procédé de lecture du support d'enregistrement qui ne présentent pas les difficultés et limites des techniques de lecture exposées ci-dessus.

Un but est en particulier de proposer un procédé de lecture ne provoquant aucune usure, ni de l'équipement de lecture ni du support d'enregistrement.

Un autre but est de proposer un procédé de lecture fiable affranchi des erreurs de lecture liées à des variations de la distance entre l'équipement de lecture et du support d'enregistrement.

Un but est encore de proposer un support d'informations perfectionné adapté au procédé de lecture.

Un but est enfin de proposer un procédé d'enregistrement sur le support d'informations.

Pour atteindre ces buts, l'invention a plus précisément pour objet un procédé de lecture d'un support d'informations comprenant une couche d'enregistrement avec une succession de zones de matériau présentant respectivement un premier état et un deuxième état physiques de la matière, distincts. Conformément à l'invention, on balaye la couche d'enregistrement avec un moyen de détection de champ électrique, ce champ électrique étant corrélé à la succession de zones présentant des états physiques différents.

Le procédé de l'invention est fondé sur la mise en évidence de l'existence d'un champ électrique mesurable corrélé à la succession de zones d'un matériau solide dans des états physiques de la matière différents. On entend par état physique de la matière un état lié à la structure ou à la composition du matériau par opposition à un état lié à une charge électrique, c'est-à-dire indépendant de la structure ou de la composition de la matière.

La différence d'état physique peut être intrinsèque, telle qu'une différence d'état cristallin ou ferroélectrique de la matière. Ainsi, la couche d'enregistrement peut comporter une succession de zones présentant respectivement un état cristallin et un état amorphe dudit matériau. Elle peut aussi comporter une succession de zones présentant respectivement un premier et un deuxième état ferroélectrique.

La différence d'état physique peut aussi être extrinsèque, c'est-à-dire obtenue par une modification de la composition du matériau. Ainsi, la couche d'enregistrement peut être une couche de matériau semi-conducteur avec succession de zones présentant respectivement un premier état et un deuxième état de dopage distincts.

La couche d'enregistrement peut être en un matériau choisi parmi le silicium et les composés II-IV ou III-V. Elle peut également être en un alliage à base de tellure (Te), et/ou de Germanium (Ge), et/ou d'antimoine (Sb), et/ou d'argent (Ag), et/ou d'indium (In), et/ou de cuivre (Cu), et/ou de chrome (Cr), et/ou de Vanadium (V), et/ou de sélénium (Se).

Enfin, le matériau de la couche d'enregistrement peut être un matériau ferroélectrique de type PZT (alliage Pb, Zr, Ti sous forme d'oxyde).

Le procédé de lecture peut faire appel à un dispositif de détection de champ électrique qui comporte une pointe de lecture et des moyens pour imprimer à la pointe un mouvement oscillatoire périodique. Avec un tel dispositif, la lecture résulte de la détection de modifications du mode oscillatoire.

Selon une variante, le dispositif peut également être équipé de moyens pour exercer sur la pointe une force électrostatique. Dans ce cas, la lecture résulte essentiellement de la détection de la variation de la force s'exerçant sur la pointe.

L'invention concerne également un support d'informations comprenant une couche d'enregistrement avec une succession de zones de matériau respectivement dans un premier état amorphe et un second état cristallin. Conformément à l'invention, le support d'informations peut comporter en outre une couche de protection résistive recouvrant une face d'écriture/lecture de la couche d'enregistrement. Cette couche présente une résistivité inférieure à une résistivité du matériau de la couche d'enregistrement, dans chacun des états physiques.

La couche de protection, en raison de sa faible résistivité n'empêche pas l'écriture d'informations dans les différentes zones, en modifiant leur état cristallin (ou amorphe) par un courant électrique.

De plus, alors que la couche de protection rendrait inopérants les procédés de lecture de l'art antérieur, elle ne constitue pas un obstacle pour la lecture conformément au procédé de l'invention.

Le support d'informations peut comporter en outre une couche électriquement conductrice, formant électrode, et recouvrant une face de la couche d'enregistrement opposée à la face d'écriture/lecture.

Enfin, l'invention concerne un procédé d'écriture d'informations codées sur un support d'informations tel que décrit.

Le procédé comprend des phases d'écriture lors desquelles on applique une pointe d'écriture conductrice contre une face d'écriture du support d'information pour provoquer localement un échauffement, par voie électrique, suffisant pour provoquer un changement de phase du matériau dans une zone de la couche d'enregistrement, et des phases de déplacement lors desquelles la pointe d'écriture est écartée de la face d'écriture du support d'information et lors de laquelle on effectue un déplacement relatif de la pointe et du support d'informations pour disposer la pointe en face d'une nouvelle zone de la couche d'enregistrement.

Selon une mise en oeuvre particulière du procédé, lorsque la pointe est appliquée sur la face de lecture, on fait passer un courant à travers la couche d'enregistrement, le courant étant choisi, selon l'information codée, entre une première valeur correspondant à l'établissement d'une zone de la couche d'enregistrement dans un état amorphe et une deuxième valeur correspondant à l'établissement d'une zone de la couche d'enregistrement dans un état cristallin.

Le courant d'écriture qui circule à travers la couche d'enregistrement est provoqué par l'application d'une tension entre la pointe conductrice et l'électrode conductrice sur la face opposée à la face de lecture. Le courant d'écriture peut prendre une première valeur faible permettant d'échauffer légèrement le matériau de la couche d'enregistrement et le rendre localement cristallin. La deuxième valeur, plus forte, permet au contraire de chauffer davantage le matériau et le rendre amorphe.

Eventuellement, pour l'écriture d'informations codées sur un support d'enregistrement initialement amorphe, la deuxième valeur de courant peut être choisie nulle (sauf pour effacer).

On considère que la pointe est appliquée sur la face d'écriture/lecture lorsque la pointe est en contact directement avec la couche d'enregistrement, dans le cas où celle-ci est dépourvue d'une couche de protection, ou lorsque la pointe est en contact avec ladite couche de protection, dans le cas où la couche d'enregistrement est pourvue d'une telle couche.

Le procédé d'écriture dans lequel la pointe est écartée lors du déplacement relatif du support et de la pointe permet de minimiser l'usure de ces parties.

Selon une variante du procédé d'écriture, on peut provoquer également un échauffement capacitif d'une zone de la couche d'enregistrement en utilisant comme armatures de condensateur la pointe d'écriture et une électrode en contact avec une face opposée à la face d'écriture.

D'autres caractéristiques et avantages de la présente invention ressortiront mieux de la description qui va suivre, en référence aux figures des dessins annexés. Cette description est donnée à titre purement illustratif et non limitatif.

Brève description des figures

- La figure 1, déjà décrite, est une représentation schématique et simplifiée d'un système connu de lecture et d'écriture d'informations et d'une partie d'un support d'informations associé.
- La figure 2, déjà décrite, est une représentation schématique et simplifiée d'un autre système connu de lecture d'informations et d'une partie d'un support d'informations associé.
- La figure 3, déjà décrite, est un diagramme de caractéristiques courant/tension du dispositif de lecture de la figure 2.
- La figure 4 est une représentation schématique simplifiée d'un dispositif de détection de champ pouvant être utilisé dans le procédé de lecture de l'invention, ainsi que d'un support d'informations pouvant être lu par le dispositif de détection.
- La figure 5 est une représentation schématique simplifiée d'un autre dispositif de détection de champ pouvant être utilisé dans le procédé de lecture de l'invention, ainsi que d'une variante du support d'informations pouvant être lu par le dispositif de l'invention.
- La figure 6 illustre sous la forme de chronogrammes le procédé d'écriture d'informations codées sur un support d'informations.

Description détaillée de modes de mise en oeuvre de l'invention

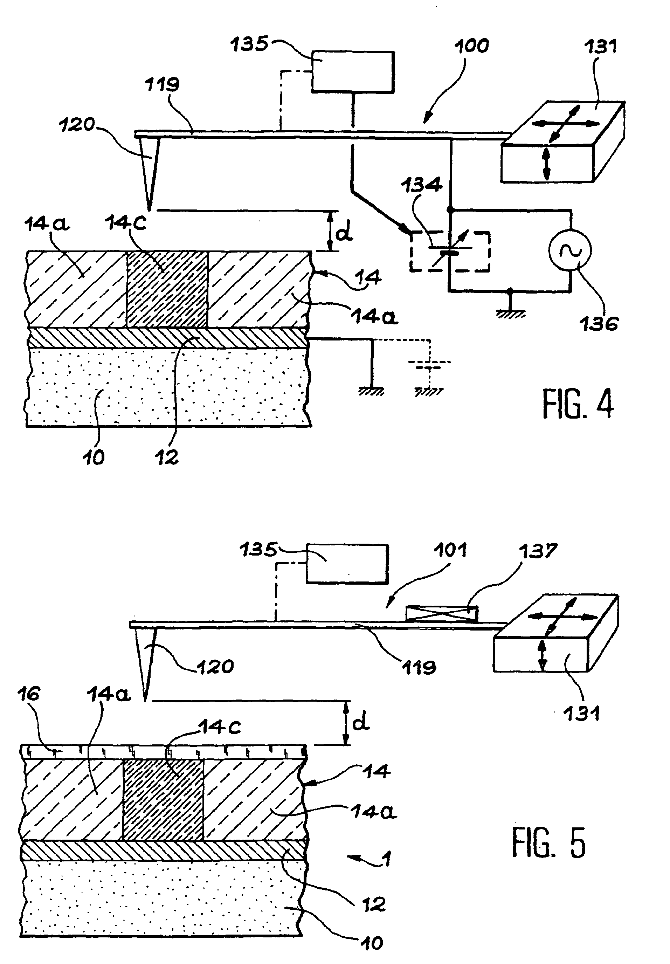

Dans le texte qui suit, des éléments identiques, similaires ou correspondants des figures 4 à 6 sont repérés par les mêmes références, de manière à ne pas répéter la description détaillée de ces éléments pour chaque figure.

La figure 4 montre de façon schématique un support d'informations 1 semblable à celui de la figure 1 et un dispositif de détection de champ 100.

Le support d'informations 1 comprend un substrat de support 10, une couche 12 conductrice formant électrode et une couche 14 en un matériau présentant des zones 14a dans un état amorphe et des zones 14c dans un état cristallin. Le matériau de la couche 14 est, par exemple, un alliage $Ge_2Sb_2Te_5$, du silicium ou un composé II-IV ou III-V. La taille, la succession ou la distance entre les zones cristallines et amorphes constituent un codage correspondant à des données d'informations enregistrées. Ces données peuvent par exemple provenir d'un échantillonnage d'une image, de son ou de toute grandeur physique.

La lecture du support est assurée, conformément à l'invention, par un dispositif de détection de champ 100.

Le dispositif de détection 100 est un dispositif en soi connu et utilisé notamment pour la détection de potentiels de surface dans des techniques de microscopie par stress Maxwell.

Le dispositif comprend une poutrelle 119 flexible. Une première extrémité de la poutrelle 119 est équipée d'une pointe de lecture (et éventuellement d'écriture) 120, en un matériau conducteur électrique. La deuxième extrémité de la poutrelle est solidaire d'un support.

Dans l'exemple illustré, la deuxième extrémité est solidaire d'un actionneur 131 permettant de déplacer l'extrémité perpendiculairement et parallèlement à la surface du support d'informations.

Un déplacement perpendiculaire au support d'informations permet d'augmenter ou de diminuer une distance d séparant l'extrémité de la pointe 120 de la face d'écriture/lecture du support 1. La distance d est ajustée par exemple à une valeur comprise entre 10 nm et 100 nm.

Un déplacement parallèle à la surface du support d'informations permet par ailleurs de balayer la face de lecture lors de la lecture des informations codées.

Une source de tension alternative 136 reliée à la pointe de lecture par l'intermédiaire de la poutrelle 119 est prévue pour appliquer à ladite pointe une tension alternative. La tension est définie par rapport à un potentiel de masse appliqué également à l'électrode 12 du support d'informations. Eventuellement, à titre de variante, le potentiel de l'électrode 12 peut être aussi décalé par rapport au potentiel de masse.

La tension alternative appliquée à la pointe de lecture entraîne une force électrostatique qui s'exerce sur la pointe de lecture à la fréquence de la tension alternative. Cette force électrostatique provoque un déplacement (déflexion) de la pointe de lecture 120 accompagnée d'une flexion correspondante de la poutrelle 119 à la fréquence de la tension alternative.

La référence 135 désigne un dispositif permettant de mesurer le déplacement (déflexion) de la pointe de mesure 120, et donc de mesurer indirectement la force exercée sur celle-ci. Le dispositif de mesure 135 est par exemple un capteur piézorésistif sur la poutrelle 119 ou un moyen de mesure de la déviation d'un faisceau laser après réflexion sur la poutrelle 119.

Une source de tension continue supplémentaire 134 est prévue pour appliquer à la pointe de lecture une tension continue supplémentaire (par rapport à la masse par exemple) dont la valeur est ajustée de façon à annuler la force électrostatique à la fréquence de la tension alternative exercée sur la pointe de lecture 120.

En particulier, la valeur de la tension continue est ajustée de telle façon que le dispositif 135 de mesure du déplacement de la pointe de mesure indique une position de la pointe (ou déflexion de la poutrelle) qui correspond à un état dans lequel la pointe de lecture est soumise à une force électrostatique nulle. Une flèche indique la possibilité d'asservir la valeur de la tension fournie par la source 134 au déplacement (en Z) de pointe.

De façon plus précise, la pointe de mesure est soumise à une force électrostatique d'amplitude F telle que :

$$F = \frac{dC}{dz} \cdot V_{AC} \cdot V$$

Dans cette expression $V_{AC}$ désigne la valeur de la tension alternative fournie par la source de tension alternative, $\frac{dC}{dz}$ est la dérivée d'une capacité formée entre la pointe de lecture 120 et le support d'informations (par rapport à l'espacement entre les armatures de cette capacité) et V désigne une différence de tension continue existant entre la pointe de lecture et le support d'enregistrement.

La force exercée sur la pointe est nulle lorsqu'on impose entre la pointe de lecture 120 et l'électrode 12 du support d'informations une tension continue $V_{DC}$ telle que V=0. Ceci est le cas lorsque la tension $V_{DC}$ est égale en amplitude à un potentiel du support d'enregistrement.

Il est possible ainsi de détecter, par exemple, des potentiels liés à la succession des zones, ou aux interfaces entre des zones amorphes et cristallines de la couche d'enregistrement du support d'information.

La tension continue appliquée à la pointe pour annuler la force électrostatique peut être considérée comme une valeur de lecture délivrée par le dispositif.

La figue 5 montre une variante de réalisation du support d'information et un autre type de dispositif de détection de champ électriques pouvant être utilisé pour la mise en oeuvre du procédé de lecture de l'invention.

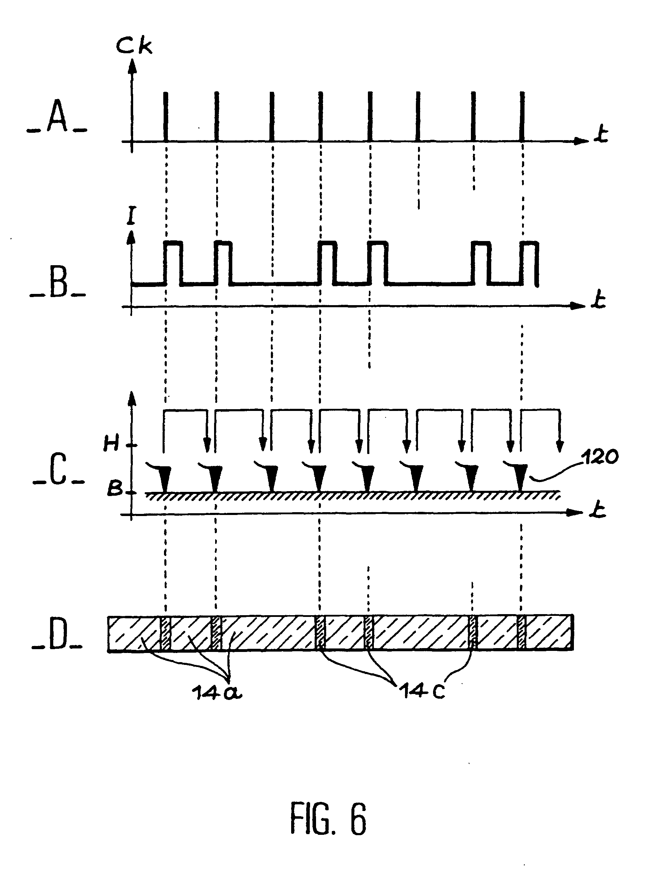

Le support d'information 1 de la figure 5 est sensiblement identique à celui de la figure 4 et la description détaillée de ses parties constitutives n'est par conséquent pas reprise ici. Il s'en distingue toutefois par une couche de protection 16 en un matériau résistif tel que ITO ("Indium Tin Oxide" ou oxyde d'étain et d'indium) ou SiC qui recouvre la couche d'enregistrement. La surface libre de la couche de protection constitue ainsi une nouvelle face d'écriture/lecture.

Le matériau de la couche de protection est choisi pour présenter une résistivité inférieure à celle des zones cristallines ou amorphes, il n'empêche ainsi ni la lecture ni l'écriture des informations codées dans la couche d'enregistrement 14. L'épaisseur de la couche de protection est par exemple de 5 nm et sa résistivité de

$10^{-1}\Omega$. cm.

Le dispositif de détection de champ électrique 101, sommairement représenté à la figure 5 est un dispositif en soi connu dans les techniques de microscopie par force électrique (EFM en anglais).

A l'instar du dispositif de la figure 4, il comporte une pointe de lecture 120 supportée par une poutrelle flexible 119.

La pointe est toujours maintenue à une certaine distance d de la face de lecture formée par la couche d'enregistrement ou la couche de protection, pour une lecture sans contact.

Toutefois, dans le cas de la figure 5, aucune tension n'est appliquée à la pointe de lecture. La pointe, solidaire de la poutrelle flexible 119, est mécaniquement mise en oscillation, sensiblement à la fréquence de résonance de l'ensemble formé par la poutrelle et la pointe. La mise en oscillation peut être provoquée par exemple au moyen d'un actionneur piézo-électrique 137 solidaire de la poutrelle 119.

Le dispositif de mesure du déplacement de la pointe (ou déflexion de la poutrelle) est conçu pour détecter des variations de phase, d'amplitude et/ou de fréquence d'oscillation de la pointe.

On observe que le passage de la pointe de lecture au-dessus de zones de la couche d'enregistrement 14 présentant des états physiques distincts se traduit par des modifications, par exemple de l'amplitude, des oscillations de la pointe de lecture.

La détection de ces variations permet de reconnaître, par exemple, les transitions d'une zone amorphe à une zone cristalline ou les transitions d'une zone cristalline à une zone amorphe.

Les variations des oscillations détectées par le dispositif de mesure 135 permettent donc de lire l'information codée dans la couche d'enregistrement.

Il convient de rappeler que les dispositifs de détection de champ électrique sont en soi connus. Une description plus complète de ces dispositifs et de leur domaines d'utilisation habituels est donnée, par exemple, dans les documents (1), (2), (3) et (4) dont les références sont précisées à la fin de la présente description.

Il convient par ailleurs de noter que la couche d'électrode 12 du support d'informations 1 visible sur la figure 5 ne contribue aucunement à la lecture de la couche d'enregistrement avec le dispositif de détection de champ 101 de la figure 5. Cette couche pourrait ainsi être omise. Par ailleurs, le support d'informations de la figure 5, équipé de la couche d'électrode, peut être lu par le dispositif de détection de champ 100 de la figure 4.

La couche d'électrode 12 peut être mise à profit pour faire circuler dans la couche d'enregistrement un courant d'écriture afin de provoquer un échauffement et une modification correspondante de l'état du matériau de cette couche dans des zones déterminées.

La figure 6 montre sous la forme de graphiques et de chronogrammes un procédé d'écriture utilisant la pointe de lecture (conductrice) des dispositifs décrits précédemment comme pointe d'écriture.

La pointe de lecture/écriture 120 est périodiquement mise en contact puis écartée de la surface du support d'informations. Ceci revient à abaisser puis à relever la pointe au moyen de l'actionneur 131 visible sur les figures 4 et 5.

L'abaissement et le relèvement de la pointe sont cadencés par des impulsions d'horloge Ck représentées par un graphique de la partie A de la figure 6.

La partie C de la figure 6 montre que la pointe 120, représentée plusieurs fois au cours du temps t, est abaissée et en contact avec le support d'informations de façon synchrone avec chaque impulsion d'horloge et relevée entre deux impulsions. Les positions abaissée et relevée de la pointe sont respectivement indiquées par les lettres B et H du graphique (partie C).

Lorsque la pointe 120 est relevée un déplacement relatif entre la pointe et le support d'informations est provoqué de façon à balayer la couche d'enregistrement 14 au cours du procédé d'écriture.

La partie B de la figure 6 est un graphique qui indique au cours du temps le courant traversant la pointe de lecture/écriture 120. On rappelle que ce courant est utilisé pour écrire des informations codées dans la couche d'enregistrement par modification locale de son état physique.

Des impulsions de courant sont appliquées à la couche d'enregistrement en synchronisation avec certaines impulsions d'horloge et un courant nul, ou de valeur différente, est appliqué pour d'autres impulsions, de façon à effectuer un codage correspondant à l'information à enregistrer (entre 20 et 150 nA). Ces valeurs dépendent du matériau lui-même, des épaisseurs des couches, etc... et de la géométrie de la pointe.

A titre d'exemple, les impulsions de courant peuvent correspondre à des informations de type logique 1, et l'absence d'impulsion à des informations de type logique 0.

La partie D de la figure 6 montre de façon schématique une couche d'enregistrement initialement amorphe et cristallisée localement en réponse aux impulsions de courant correspondant à la partie B de la figure.

Dans cette couche, les zones cristallisées 14c correspondent, par exemple à un état logique 1 et les zones amorphes 14a à des états logiques 0.

## DOCUMENTS CITES

**(1)**
"Détermination of sign of surface charges of ferroelectric TGS using electrostatic force microscope combined with the voltage modulation technique"
Junji OHGAMI, Yasuhiro SUGAWARA, Seizo MORITA, Eiji NAKAMURA and Toru OZAKI
Jpn. J. Appl. Phys. Vol. 35 (1996) pp.2734-2739, Part I, n° 5A, May 1996

**(2)**
"High density charge storage memory with scanning probe microscopy
Ichiro FUJIWARA, Sigeru KOJIMA and Jun'etsu SETO
Jpn. J. Appl. Phys. Vol. 35(1996) pp.2764-2769, Part I, n° 5A, May 1996

**(3)**
MFM/EFM Imaging-Dimension-series SPM$_S$
Support note 206, §206.4.4
Scanning Probe Microscope-Instruction Manual chap. 13. Magnetic & Electric Force Imaging - Digital Instruments.

**(4)**
MFM/EFM Imaging-Dimension-series SPM$_S$
Support note 206, §206.4
Scanning Probe Microscope-Instruction Manual chap. 13. Magnetic & Electric Force Imaging - Digital Instruments.

**(5)** EP-A-0 851 417

**(6)**
EP-A-0 551 814
(utilisé pour définir le préambule de la revendication 1)

**(7)**
EP-A-5 155 573

## Revendications

**1.** Procédé de lecture d'un support d'informations (1) comprenant une couche d'enregistrement (14) avec une succession de zones de matériau (14a, 14c) présentant respectivement un premier état et un deuxième état physiques de la matière, distincts, **caractérisé en ce qu'**on balaye la couche d'enregistrement avec un moyen (100, 101) de détection de champ électrique, ce champ électrique étant corrélé à la succession de zones présentant des états physiques différents.

**2.** Procédé selon la revendication 1, pour la lecture d'un support d'information dans lequel la couche d'enregistrement (14) comporte une couche de matériau avec une succession de zones présentant respectivement un état cristallin et un état amorphe dudit matériau.

**3.** Procédé selon la revendication 2, pour la lecture d'un support d'information dans lequel la couche d'enregistrement (14) est en un alliage à base de tellure (Te), et/ou de Germanium (Ge), et/ou d'antimoine (Sb), et/ou d'argent (Ag), et/ou d'indium (In), et/ou de cuivre (Cu), et/ou de chrome (Cr), et/ou de Vanadium (V), et/ou de sélénium (Se).

**4.** Procédé selon la revendication 1, pour la lecture d'un support d'information dans lequel la couche d'enregistrement (14) est une couche de matériau semi-conducteur avec succession de zones présentant respectivement un premier état et un deuxième état de dopage distincts.

**5.** Procédé selon la revendication 1, pour la lecture d'un support d'information dans lequel la couche d'enregistrement (14) est en un matériau choisi parmi le silicium et les composés II-IV ou III-V.

**6.** Procédé selon la revendication 1, pour la lecture d'un support d'informations (1) dans lequel la couche d'enregistrement (14) est une couche de matériau avec une succession de zones présentant respectivement un premier et un deuxième état ferroélectrique.

**7.** Procédé selon la revendication 6, dans lequel le matériau est un matériau ferroélectrique de type PZT.

**8.** Procédé selon la revendication 1, dans lequel on balaye la couche d'enregistrement avec un dispositif de détection de champ (101) qui comporte une poutrelle (119) avec une pointe de lecture (120), et au moins un moteur piézo-électrique (137) pour imprimer un mouvement oscillatoire à la poutrelle.

**9.** Procédé selon la revendication 1, dans lequel on balaye la couche d'enregistrement avec un dispositif de détection de champ (100) qui comporte une poutrelle (119) avec une pointe de lecture (120) et des moyens (136) pour exercer sur la pointe une force électrostatique.

**10.** Support d'enregistrement adapté à un procédé de lecture selon la revendication 1, comprenant une couche d'enregistrement (14) avec une succession de zones de matériau (14a, 14c) respectivement dans un état amorphe et un état cristallin, **caractérisé en ce qu'**il comporte en outre une couche de protection (16) résistive recouvrant la couche d'enregistrement (14) et présentant une résistivité inférieure à une résistivité du matériau de la couche d'enregistrement, dans chacun des états physiques.

**11.** Support d'enregistrement selon la revendication 10, comprenant en outre une couche électriquement conductrice (12) recouvrant une face de la couche d'enregistrement (14) opposée à la couche de protection (16).

**12.** Utilisation d'un dispositif de détection de champ électrique pour la lecture d'un support d'informations (1) comprenant une couche d'enregistrement (14) présentant une succession de zones (14a, 14c) d'un même matériau se présentant dans respectivement deux états physiques distincts, ce champ électrique étant corrélé à ladite succession de zones.

**13.** Procédé d'écriture sur un support d'informations destiné à être lu conformément au procédé de la revendication 1 et comprenant une couche d'enregistrement en un matériau pouvant subir localement, par un effet d'échauffement, des transitions de phase entre un état amorphe et un état cristallin, le procédé d'écriture comprenant des phases d'écriture lors desquelles on applique une pointe d'écriture conductrice (120) contre une face d'écriture du support d'information pour provoquer localement un échauffement, par voie électrique, suffisant pour provoquer un changement de phase du matériau dans une zone de la couche d'enregistrement, **caractérisé en ce que** le procédé d'écriture comprend des phases de déplacement lors desquelles la pointe d'écriture est écartée de la face d'écriture du support d'information et lors de laquelle on effectue un déplacement relatif de la pointe (120) et du support d'informations (1) pour disposer la pointe en face d'une nouvelle zone de la couche d'enregistrement.

**14.** Procédé selon la revendication 13, dans lequel lors de la phase d'écriture on provoque un échauffement par circulation d'un courant électrique à travers la couche d'enregistrement (14) entre la pointe (120) d'écriture et une électrode (12) en contact avec une face de la couche d'enregistrement opposée à la face d'écriture.

**15.** Procédé selon la revendication 13, dans lequel, lors de la phase d'écriture, on provoque un échauffement capacitif d'une zone de la couche d'enregistrement en utilisant comme armatures de condensateur la pointe d'écriture et une électrode en contact avec une face opposée à la face d'écriture.

**16.** Procédé d'écriture d'informations codées sur un support d'informations, selon la revendication 14, dans lequel, le courant est choisi selon l'information codée, entre une première valeur correspondant à l'établissement d'une zone de matériau de la couche d'enregistrement dans un état amorphe et une deuxième valeur correspondant à l'établissement d'une zone de matériau de la couche d'enregistrement dans un état cristallin.

**17.** Procédé selon la revendication 16 pour l'écriture d'informations codées sur un support d'enregistrement initialement amorphe, dans lequel la deuxième valeur de courant est nulle.

**Patentansprüche**

1. Verfahren zum Lesen eines Informationsträgers (1) mit einer Aufzeichnungsschicht (14), die eine Abfolge von Materialbereichen (14a, 14c) aufweist, die jeweils einen unterschiedlichen ersten und zweiten physikalischen Zustand des Materials aufweisen, **dadurch gekennzeichnet, dass** man die Aufzeichnungsschicht mit einer Einrichtung (100, 101) zur Detektion eines elektrischen Feldes abtastet, wobei dieses elektrische Feld mit der Abfolge der unterschiedliche physikalische Zustände aufweisenden Bereiche korreliert wird.

2. Verfahren nach Anspruch 1, zum Lesen eines Informationsträgers, bei dem die Aufzeichnungsschicht (14) eine Materialschicht mit einer Abfolge von Bereichen umfasst, die jeweils einen kristallinen und einen amorphen Zustand des genannten Materials aufweisen.

3. Verfahren nach Anspruch 2, zum Lesen eines Informationsträgers, bei dem die Aufzeichnungsschicht (14) aus einer Legierung auf der Basis von Tellur (Te) und/oder Germanium (Ge) und/oder Antimon (Sb) und/oder Silber (Ag) und/oder Indium (In) und/oder Kupfer (Cu) und/oder Chrom (Cr) und/oder Vanadium (V) und/oder Selen (Se) ist.

4. Verfahren nach Anspruch 1, zum Lesen eines Informationsträgers, bei dem die Aufzeichnungsschicht (14) aus einem Halbleitermaterial mit einer Abfolge von Bereichen ist, die jeweils einen ersten und einen zweiten Zustand mit unterschiedlicher Dotierung aufweisen.

5. Verfahren nach Anspruch 1, zum Lesen eines Informationsträgers, bei dem die Aufzeichnungsschicht (14) aus einem zwischen Silicium und den II-IV- oder III-V-Verbindungen ausgewählten Material ist.

6. Verfahren nach Anspruch 1, zum Lesen eines Informationsträgers (1), bei dem die Aufzeichnungsschicht (14) eine Materialschicht mit einer Abfolge von Bereichen ist, die jeweils einen ersten und einen zweiten ferroelektrischen Zustand aufweisen.

7. Verfahren nach Anspruch 6, bei dem das Material ein ferroelektrisches Material des Typs PZT ist.

8. Verfahren nach Anspruch 1, bei dem man die Aufzeichnungsschicht mit einer Fetddetektionsvorrichtung (101) abtastet, die einen Träger (119) mit einer Lesespitze (120) und wenigstens einen piezoelektrischen Motor (137) umfasst, um den Träger in eine Oszillationsbewegung zu versetzen.

9. Verfahren nach Anspruch 1, bei dem man die Aufzeichnungsschicht mit einer Felddetektionsvorrichtung (100) abtastet, die einen Träger (119) mit einer Lesespitze (120) und Einrichtungen (136) zur Ausübung einer elektrostatischen Kraft auf die Spitze umfasst.

10. Aufzeichnungsträger, angepasst an ein Leseverfahren nach Anspruch 1, eine Aufzeichnungsschicht (14) mit einer Abfolge von jeweils in einem amorphen Zustand und einem kristallinen Zustand befindlichen Materialbereichen (14a, 14c) umfassend, **dadurch gekennzeichnet, dass** er außerdem eine resistive Schutzschicht (16) umfasst, welche die Aufzeichnungsschicht (14) bedeckt und in jedem der physikalischen Zustände eine niedrigere Resistivität als eine Resistivität des Materials der Aufzeichnungsschicht aufweist.

11. Aufzeichnungsträger nach Anspruch 10, mit außerdem einer elektrisch leitfähigen Schicht (12), die eine der Schutzschicht (16) entgegengesetzte Fläche der Aufzeichnungsschicht (14) bedeckt.

12. Verwendung einer Detektionsvorrichtung eines elektrischen Feldes zum Lesen eines eine Aufzeichnungsschicht (14) umfassenden Informationsträgers (1) mit einer Abfolge von Bereichen (14a, 14c) aus einem selben Material mit zwei jeweils unterschiedlichen physikalischen Zuständen, wobei dieses elektrische Feld mit der genannten Abfolge korreliert wird.

13. Verfahren zum Einschreiben in einen Informationsträger, der gemäß dem Verfahren des Anspruchs 1 ausgelesen wird und eine Aufzeichnungsschicht aus einem Material umfasst, das lokal durch einen Erwärnnungseffekt Phasenübergänge zwischen einem amorphen und einem kristallinen Zustand ermöglicht, wobei das Schreibverfahren Schreibphasen umfasst, während denen man eine leitfähige Schreibspitze (120) gegen eine Schreibfläche des Informationsträgers drückt, um lokal auf elektrischem Wege eine Erwärmung zu bewirken, die ausreicht, um in einem Bereich der Aufzeichnungsschicht einen Phasenübergang zu bewirken, **dadurch gekennzeichnet, dass** das Schreibverfahren Verschiebungsphasen umfasst, während denen die Schreibspitze von der Schreibfläche des informationsträgers entfernt wird und man eine Relativwerschiebung zwischen der Spitze (120) und dem Informationsträger (1) ausführt, um die Spitze vor einem neuen Bereich der Aufzeichnungsschicht anzuordnen.

14. Verfahren nach Anspruch 13, bei dem man während der Schreibphase eine Erwärmung bewirkt, indem man durch die Aufzeichnungsschicht (14) hindurch einen elektrischen Strom fließen lässt, zwischen der Spitze (120) und einer Elektrode (12), die Kontakt hat mit einer der Schreibfläche entgegengesetzten Fläche der Aufzeichnungsschicht.

**15.** Verfahren nach Anspruch 13, bei dem man während der Schreibphase eine kapazitive Erwärmung eines Bereichs der Aufzeichnungsschicht (14) bewirkt, indem man als Kondensatorbelegungen die Schreibspitze und eine Elektrode benutzt, die Kontakt hat mit einer der Schreibfläche entgegengesetzten Fläche.

**16.** Verfahren nach Anspruch 14 zum Einschreiben codierter informationen in einen Informationsträger, bei dem der Strom gemäß der codierten Information ausgewählt wird zwischen einem der Herstellung eines amorphen Zustands in einer Materialzone der Aufzeichnungsschicht entsprechenden ersten Wert und einem der Herstellung eines kristallinen Zustands in einer Materialzone der Aufzeichnungsschicht entsprechenden zweiten Wert.

**17.** Verfahren nach Anspruch 16 zum Einschreiben codierter Informationen in einen anfänglich amorphen Aufzeichnungträger, bei dem der zweite Stromwert null ist.


**Claims**

**1.** Method for reading an information medium (1) comprising a recording layer (14) with a succession of zones of material (14a, 14c) with distinct first and second physical states of the material respectively, **characterized in that** the recording layer is scanned with means (100, 101) for detecting electrical fields, said electrical field being correlated with the succession of zones having different physical states.

**2.** Method of claim 1 for reading an information medium, wherein recording layer (14) comprises a layer of material with a succession of zones with a crystalline state and an amorphous state respectively.

**3.** Method of claim 2 for reading an information medium, wherein recording layer (14) is an alloy with a base of tellurium (Te), and/or germanium (Ge), and/or antimony (Sb), and/or silver (Ag), and/or indium (In), and/or copper (Cu), and/or chrome (Cr), and/or vanadium (v) and/or selenium (Se).

**4.** Method of claim 1 for reading an information medium, wherein recording layer (14) is a layer of semiconductor material with a succession of zones with a first and second state of distinct doping respectively.

**5.** Method of claim 1 for reading an information medium, wherein recording layer (14) is made of a silicon material or II-IV or III-V compounds.

**6.** Method of claim 1 for reading an information medium (1), wherein recording layer (14) is a layer of materia with a succession of zones with a first and second ferroelectric state respectively.

**7.** Method of claim 1, wherein the material is a PZT-type ferroelectric material.

**8.** Method of claim 1, wherein the recording layer is scanned with a field detection apparatus (101) that comprises a beam (119) with a reading point (120) and at least one piezoelectric engine (137) to impose an oscillatory movement on the beam.

**9.** Method of claim 1, wherein the recording layer is scanned with a field detection apparatus (100) that comprises a beam (119) with a reading point (120) and means (136) to apply electrostatic force to the point.

**10.** Recording medium suited to a reading method of claim 1 comprising a recording layer (14) with a succession of zones of material (14a, 14c) in a first amorphous state and a second crystalline state respectively, **characterized in that** it also comprises a protective layer (16) covering the recording layer (14), the resistivity of this layer being lower than the resistivity of the material of the recording layer in each of the physical states.

**11.** Recording medium of claim 10 also comprising an electrical conductor layer (12) that covers a surface of the recording layer (14) facing the protective layer (16).

**12.** Use of an apparatus for detecting electrical fields to read an information medium (1) comprising a recording layer (14) with a succession of zones (14a, 14c) made of the same material with two distinct physical states respectively, said electrical field being correlated with said succession of zones.

**13.** Method for writing on an information medium intended to be read according to the method of claim 1 and comprising a recording layer made of a material capable of being subjected locally, due to a heating effect, to transitions of phase between an amorphous state and a crystalline state, the writing method comprising writing phases during which a conductor writing point (120) is applied to a writing face of the information medium in order to create localized heating using electricity that is sufficient to cause a phase change of the material in a zone of the recording layer, **characterized in that** said writing method comprises displacement phases during which the writing point is remote from the writing surface of the information medium and during which a relative displacement of the point (120) and information medium (1) is effected in order to position the point opposite a new zone of the recording layer.

**14.** Method of claim 13, wherein during the writing phase heating is created by passing an electric current through the recording layer (14) between the writing point (120) and an electrode (14) in contact with a surface of the recording layer opposite the writing surface.

**15.** Method of claim 13, wherein during the writing phase capacitive heating is created of a zone of the recording layer by using the writing point and an electrode in contact with a surface facing the writing surface as capacitor plates.

**16.** Method for writing encoded information on an information medium of claim 14, wherein the current is selected (depending on the encoded information) between a first value that establishes a zone of the recording layer in an amorphous state and a second value that establishes a zone of the recording layer in a crystalline state.

**17.** Method of claim 16 for writing encoded information on a recording medium that is initially amorphous, wherein the second value of the current is zero.

FIG. 1

FIG. 2

FIG. 3

FIG. 4

FIG. 5

FIG. 6